Europäisches Patentamt

European Patent Office

Office européen des brevets

(11) Publication number: **0 374 985**
**A1**

## (12) EUROPEAN PATENT APPLICATION

(21) Application number: **89202784.8**

(22) Date of filing: **06.11.89**

(51) Int. Cl.5: **E21B 49/00, G01N 27/28**

(30) Priority: **21.12.88 GB 8829757**

(43) Date of publication of application:
**27.06.90 Bulletin 90/26**

(84) Designated Contracting States:
**DE FR IT NL**

(71) Applicant: **Forex Neptune SA**
**50 Avenue Jean Jaures**
**F-92120 Montrouge(FR)**

(72) Inventor: **Jasinski, Raymond**
**5705 East 108 Street**
**Tulsa Oklahoma 74137(US)**
Inventor: **Fletcher, Philip**
**31 Worcester Avenue**
**Hardwick Cambridgeshire(GB)**

(74) Representative: **Dupont, Henri**
**c/o Schlumberger Cambridge Research**
**Limited High Cross PO Box 153**
**Cambridge CB3 0HG(GB)**

(54) **Monitoring drilling mud composition using ion selective electrodes.**

(57) In the rotary drilling of oil wells a drilling mud is used both to transport the cuttings up to the surface and to impose an hydrostatic pressure on the walls of the borehole. For these functions the mud must for example have an acceptable density and viscosity. It is therefore important to monitor the characteristics of the mud, and to keep them within certain limits. Only recently, however, has drilling practice recognised the importance of monitoring the mud's ionic composition.

The technique proposed involves the use of an ion selective/ion selective electrode pair to measure in the mud the potential of the selected ion pair, and so allow a determination of one ion's concentration. Thus, it is a method in which, using a selective/selective electrode pair, there is determined the potential difference generated by, and thus the concentration of, the two ions in the mud - and knowing the concentration of the second ion there may be computed that of the other (chosen) one.

EP 0 374 985 A1

EP 0 374 985 A1

## MONITORING DRILLING MUD COMPOSITION USING ION SELECTIVE ELECTRODES

In the rotary drilling of wells, such as hydrocarbon (oil and gas) wells, a mud is continuously circulated from the surface down to the bottom of the hole being drilled and back to the surface again. The mud -usually a fluid mixture of a clay such as bentonite suspended in a continuous phase such as water - has several functions. One of these is to transport the cuttings drilled by the drill bit up to the surface where they are separated from the mud. For this purpose the mud must be viscous enough to entrain the cuttings yet fluid enough to pump. Another function is to impose an hydrostatic pressure on the walls of the borehole so as to avoid a collapse of the borehole and an influx of gas or liquid from the formations being drilled. For this function the mud must be dense enough to resist formation pressure, yet not so dense that its pressure forces it deep into the formations, possibly fracturing them. It is therefore important to monitor the characteristics of the mud, and to keep them within certain limits. Weighting materials, barite for example, are added to the mud to make it exert as much pressure as needed to contain the formation pressures. Numerous chemicals are available to give the mud the exact properties it needs to make it as easy as possible to drill the hole, and the importance of the mud, and the difficulties of controlling its composition, can be fully appreciated.

It is known that during the drilling process the ionic composition of the drilling mud changes from its original formulation. These changes in composition are in part a measure of the downhole processes which may be termed mud-rock interactions. An important example of mud-rock interactions is ion exchange between cations in the mud and in shale formations. Until recently drilling practice has not required the ionic composition of the mud to be monitored, so that the extent of these interactions has not been determined, and the composition of the drilling mud has not been accurately maintained. However, in the Specification of our published Application for European Patent No: 0 282 231, we have described how important such a monitoring process is, and how useful it can be. In general, in that patent application we described a method for controlling the drilling of boreholes by determining the ionic compositions of the drilling muds and/or drilled cuttings in order to monitor various chemical processes which occur in the wellbores, eg salt water influxes, changes in the solubility of salts with changes in pH, and cation exchange processes involving the cations added to the water-base mud (eg. potassium, calcium) to stabilise shale sections.

More specifically, in this earlier application we have described and claimed a mud control method in which the mud is sampled and its aqueous filtrate is analysed at the rig site by ion chromatography for determining concentrations of selected positive and negative ion. In addition, the pH and the temperature of each sample may be measured. In a preferred embodiment, the anion, monovalent cation and divalent cation contents of the mud sample filtrate are determined by three chromatography units. Preferably, the composition of the mud filtrate thus monitored is interpreted to indicate downhole interactions, with the composition of the mud supplied to the hole being adjusted to or towards the optimum as drilling proceeds.

The method of the aforementioned European application preferably involve the use of ion chromatography to determine the nature and quantity of the various ionic mud components, and within the expected bounds they work well. However, ion chromatography as a technique is not best suited for application outside a laboratory, and its employ on an oil drilling rig can be a little difficult, even when automated as fully as possible. There has thus been proposed a different approach to the determination of the ionic mud components, one that is simpler and more "robust" - and therefore better suited to the on-site conditions where it is likely to be needed. Specifically, it has been suggested that use may be made of the known electrical potential generating effect of an ion in solution in contact with an appropriate electrode, and of the fact that this potential is indicative of the concentration of the "selected" ion in the solution. Thus, the measurable difference between the two potentials generated at an electrode selective for a particular ion and at a reference electrode is similarly indicative of the selected ion's concentration.

Thus, it has been proposed that the nature and quantity of very specific ionic mud component be ascertained by using a suitable ion selective electrode/reference electrode pair to measure the potential difference set up by the "selected" ion, and so allow a calculation of that ion's concentration in the mud. Indeed, such a selective/reference electrode pair technique forms the subject of our co-pending British Patent Application, entitled "Monitoring Drilling Mud using Flowing Liquid Junction Electrodes", filed together with the present Application, where it is defined as a method for the determination of a chosen ionic component of a drilling mud, in which, using an electrode selective for the chosen ion together with a reference electrode of the type having a liquid junction formed by a liquid electrolyte connectable via an aperture within the reference electrode containment vessel, there is determined the potential difference generated across the two electrodes by the ion in the mud, and thus there is determined the concentration

2

of that ion in the mud, and in which, during the determination, the electrolyte constituting the reference electrode's liquid junction is caused to flow through the electrode containment vessel's aperture and out of the vessel into the mud.

In this ion selective electrode/reference electrode method the requirement for electrolyte flow in the reference electrode is to deal with a problem thought to be caused by mud particles (which are usually electrically charged) diffusing into, and partially blocking, the reference electrode's vessel's aperture, thus creating what is in effect a semi-permeable membrane - specifically a "Donnan" membrane that selectively allows the passage of one charge types rather than the other -and so seriously altering the operation of the reference electrode, and as a consequence distorting the results. However, this problem can be avoided altogether, in accordance with the present invention, by choosing as the "reference" electrode not a conventional liquid junction device of the kind defined but instead a second ion selective electrode. The arrangement now consists of a first ion selective electrode selective to a first ion, together with a second ion selective electrode selective to a second (different) ion; provided there is in effect known the concentration of the second ion.

In one aspect, therefore, this invention provides a method for the determination of the concentration of a chosen ionic component of a drilling mud, in which, using a first ion selective electrode selective for the chosen ion together with a second ion selective electrode selective for another, known, ion, there is determined the potential difference generated across the two electrodes in the mud as a result of both these ions, and thus there is determined the concentration of the chosen ion in the mud.

The ionic components of a drilling mud may be ions of many types, in many forms. The principal ones of interest, however, are the potassium, sodium, calcium and magnesium cations, and the chloride, sulphate and bromide anions - and the carbonate and bicarbonate anions

The method of the invention appears to be applicable to the determination of any variety of water-based (as opposed to oil-based) drilling mud. A typical water-based mud - and hereinafter references to mud are to water-based mud, unless some other meaning is clearly intended - is one that is essentially a suspension of a bentonite clay in water (usually sea water, where the drilling takes place off shore) together with various additives for viscosity, pH and density control. For example, such a bentonite/sea water mud might contain the components in Table I below.

Table I

| Seawater-dispersed Mud | | |
|---|---|---|
| Component | Function | Amounts |
| | | (Kg/m3) |
| bentonite | primary viscosifier | 36 |
| XC-polymer | viscosifier | 1 |
| CMC low viscosity | fluid loss control | 10 |
| CMC high viscosity | viscosifier, fluid loss | 2 |
| chrome lignosulphate | dispersant | as req. |
| sodium hydroxide | pH control | 3 |
| sodium carbonate | calcium control | 0.9 |
| barite | mud density | as req. |
| CMC is CarboxyMethyl Cellulose. XC is a polysaccharide produced by the action of the plant pathogen Xanthomonas Campestris on carbohydrates. | | |

Other common types of mud contain the components shown in Table II below.

Table II

| Freshwater-dispersed Mud (Density = 1,500 Kg/m3) | | |
| --- | --- | --- |
| Component | Function | Amounts |
| | | (Kg/m3) |
| bentonite | primary viscosifier | 57 |
| chrome lignosulphate | dispersant | 9 |
| lignite | dispersant/thinner | 6 |
| sodium hydroxide | pH control | 3 |
| barite | weighting agent | 600 |
| Potassium/Polymer Inhibitive Mud (Density = 1,500 Kg/m3) | | |
| Component | Function | Amount |
| | | (Kg/m3) |
| bentonite | primary viscosifier | 45 |
| CMC low viscosity | fluid loss control | 1.5 |
| potassium hydroxide | potassium/pH control | 4.5 |
| XC-polymer | shale inhibition | 9 |
| calcium hydroxide | calcium control | 13 |
| barite | weighting agent | 600 |

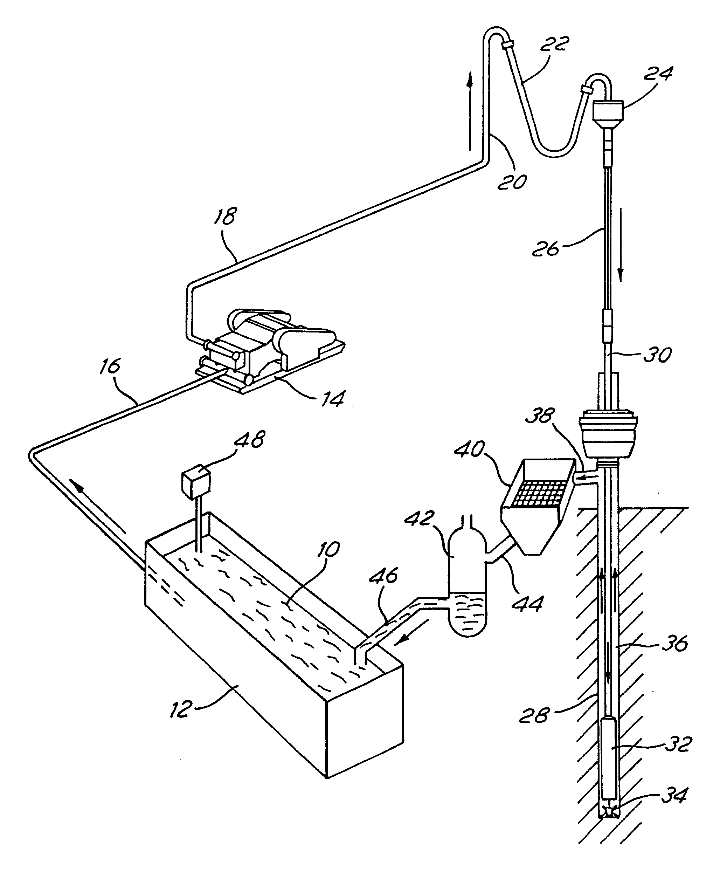

The method of the invention starts, naturally, by suitably placing the electrode pair in the mud (it would be possible to take from the system a sample of mud, but it is more convenient to position the electrodes in the mud as it circulates in the system). In principle this placement can be made anywhere in the system, but in general it is most convenient to position the electrodes in the return mud after it has just emerged from the bore (and the cuttings separated off). For checking purposes, it may be advantageous additionally to test the mud just before it is re-circulated back down into the bore (after any additive treatment). Data from the first of these provides information about what is happening to the mud down hole, whilst data from the second provides a check that the subsequent treatment did, as was intended, restore the mud to its optimum composition. In practice, the first measurement is conveniently taken immediately below the shale-shaker, and the second is taken either downstream from the active tank or in the flow line to the drill pipe. The matter will, perhaps, be most clearly understood from a consideration of Figure 1 of the accompanying Drawings.

Figure 1 shows the mud circulation equipment. The mud 10 is contained in a mud pit 12, called the active tank. A pump 14 draws up the mud from the pit through a pipe 16, and forces the mud through the discharge line 18, the stand pipe 20, the rotary hose 22 and the swivel 24. The mud then flows into the kelly 26 and down the borehole 28 in the drill pipe 30 and the drill collars 32. The mud reaches the bottom of the hole at the drill bit 34, and then flows up to the surface in the annulus 36 and in the mud return line 38. The mud then falls over a vibrating screen-like device 40, called a shale shaker.

The role of the shale shaker is to separate from the liquid phase of the mud the cuttings drilled by the bit 34 and transported up in the annulus by the mud. The separation is made by having the mud pass through a screen which vibrates. The solids (called the cuttings) which are larger than the mesh size of the screen don't pass through the screen, and are rejected either in a reserve pit (when the drilling rig is on land) or in a barge (when the drilling operations are conducted offshore). The solid particles contained in the mud which have a size smaller than the mesh size of the screen pass through the screen, and therefore remain in the mud. These fine solids (hereinafter referred to as the mud solids or the solids) comprise part of the weighting material added to the mud to reach a certain mud density, as well as fine solids from the formations traversed by the borehole.

After the shale shaker 40, the mud flows into the solids control equipment, represented schematically by 42, through the pipe 44. The solids control equipment 42 could include a degasser, a desilter and a desander (these are not shown separately here). Then the mud falls into the pit 10 through the pipe 46. A mud-mixing hopper 48 is generally used to add solid materials like clay and barite to the mud in the active tank.

In the practice of the invention, mud readings should be taken (continuously) from the active tank 12 (and possibly also from the pipe 44 between the shale shaker 40 and the solids control equipment 42).

The method of the invention requires the use of two ion selective electrodes - one selective to the ion to be determined, one to another, known, ion. In general, there are several different types of selective electrode - that is, ways of constructing an electrode so that is is selective for a particular ion - as will be understood from the following description.

Ion selective electrodes are based on an ion exchange process occurring at the interface between the electrode and the fluid phase containing the ionic species being measured. This ion exchange process generates a separation of electrical charge (ions of one charge on the solid surface and ions of the opposite charge in the fluid), and thus an electrical potential. It is this potential that is actually measured (relative to some reference potential).

The ion exchange surface can be a glass membrane (such as is used for the ubiquitous glass pH electrode), or a "solid state" membrane, commonly a crystal of an insoluble salt involving the ion being sensed (eg, silver chloride, AgCl, or lanthanum fluoride, LaF3), or a liquid containing a chemical which will interact with an ion in solution - the liquid being immobilised in an otherwise inert plastic membrane or porous diaphragm.

The selectivity of the ion selective electrode depends on the inherent selectivity of the ion exchange process of the membrane (of whichever sort). For example, certain glasses will ion exchange with hydrogen ions and ignore sodium ions, whilst other glasses will do the opposite - ion exchange sodium ions and ignore hydrogen ions.

The most common configuration for an ion selective electrode is that of a tube, typically a tube nominally 12 cm long and 1 cm in diameter. The sensing membrane is hermetically sealed to one end of the tube. Electrical contact is made to the side of the membrane inside the tube, commonly in one of two ways. The first is contact via an ionically conducting fluid. Here, the tube is filled with a solution containing an electrolyte - for example, 3.8 molar potassium ions and chloride ions; this solution is variously called the "bathing" or "bridging" solution as well as the "filling" solution. A wire - of silver, say - is placed into this solution such that it protrudes out of the tube at the non-membrane end (and is usually sealed in to prevent spillage). It has been found that the performance is improved if the portion of the wire contacting the bathing solution is coated with a substance that ion exchanges with the filling solution. An example of this type of electrode is silver chloride-on-silver, in contact with potassium chloride filling solution.

The second form of electrical contact to the sensing membrane is via direct physical contact with the wire - ie, in the absence of any bathing solution. This is commonly called an "ohmic" contact. It is generally used for the solid state sensors, though it can be used with liquid membrane sensors as well. A variation of this ohmic contact method is a wire coated directly with the sensing liquid-filled plastic.

The term "ion selective electrode" is nowadays also used to describe devices configured as just described but with an extra solution and a chemically active membrane intervening between it and the test solution. One such layer can be a membrane selectively permeable to carbon dioxide. Here the $CO_2$ passes through the membrane and dissolves in the intervening fluid phase, which is also contacted by a pH electrode. The pH change in this intervening solution is sensed, and is proportional to the amount of $CO_2$ present in the original fluid phase. Biologically active chemicals have also been used in the intervening membrane to convert the substance being sensed (eg, glucose) into a pH-altering chemical.

Available selective electrodes may be of one or other of these types. For example, some of the commercially-available electrodes that are selective for sodium, potassium, calcium, chlorine and sulphur are those in Table III below.

TABLE III

| Ion | Name | Electrode Type | Manufacturer/Supplier |
|---|---|---|---|
| Sodium (Na+) | * EIL Na+ | glass | Kent Industrial |
| " | Phillips 1S 561 | membrane | Phillips |
|  | * 1SE 315/R | glass | Russell pH Ltd |
|  | Orion 941100 | solid state | Orion Research |
| " | * Orion 971100 | glass | Orion |
| Potassium (K+) | Phillips 1SE 561 |  | membrane Phillips |
|  | * Orion 93 series |  |  |
|  | 1SN NQ1 | PVC | Orion |
|  | * EIL NH4/K+ | glass | Kent |
| Calcium (Ca++) | Russell 1SE 310 | PVC | Russell |
|  | * Phillips 1SE 561 |  | membrane Phillips |
| Chlorine (Cl-) | Russell 1SE 301 | solid state | Russell |
|  | * Phillips 1S 560 | solid state | Phillips |
| Sulphur (S=) | Russell 1SE 305 | solid state | Russell |
|  | * Orion OR941600 | solid state | Orion |

Of these, those marked with an asterisk (*) especially suited for use in the proposed method.

The method of the invention requires the use of two ion selective electrodes, one selective to the ion to be determined (hereinafter called the "chosen" ion) and the other selective to another, known, ion (hereinafter called the "second" ion), and used as the reference electrode. Although conceivably this other electrode could be one that is selective for an ion of the same sign as the chosen ion - thus, both select (different) cations, or both select (different) anions - it is more convenient to choose the second electrode to be selective for an ion of the opposite sign - thus, where the chosen ion is a cation (such as sodium or potassium) the second electrode is selective for an anion (such as chloride).

In the inventive method a first ion selective electrode suited to the chosen ion to be determined is used together with a second ion selective electrode suited to another, known, ion (the second ion). This second ion is known both as regards its type and also as regards its concentration in the solution to be analysed. There are several ways in which a knowledge of the second ion's concentration may be attained. For example, it may be measured quite independently - this approach can be used satisfactorily where the second ion is, say, chloride, the concentration of which in drilling mud varies only relatively slowly, so that its independent measurement every hour or so is not a particularly onerous task. The actual measurement may itself be carried out using an appropriate ion selective electrode and the method of "standard additions" in which the potential of the second ion is independently measured against a standard reference electrode (a third electrode) both before and after adding a small, known, quantity of the second ion, and then the results are used mathematically to give the second ion's original concentration. In more detail, this "standard addition" method used to determine the concentration of the second ion is as follows.

The response of an ion selective electrode/reference electrode pair is given by the modified Nernst equation

$$E1 = A + Slope \times Log(C1) \qquad (1)$$

where C1 is the unknown concentration in the solution to be analysed of the ion of interest, E1 is the measured potential at that concentration, and "Slope" is a constant known from a calibration of the electrode pair in the appropriate liquid with different known concentrations of the ion (in the present case, mud liquor free from any suspended particles). A known amount (equivalent to an increase C2 in concentration) of the ion is then added to the liquid, and the new potential E2 is measured. This new potential is given by the similar equation

$$E2 = A + Slope \times Log(C1 + C2) \qquad (2)$$

and the two equations can be combined to eliminate A, thus

$$(E2 - E1)/Slope = Log[(C1 + C2)/C1] \qquad (3)$$

from which C1 can be computed. This method assumes, of course, that the added amount (C2) of the second ion does not react with the mixture. Once the potential difference for the chosen selective/selective electrode pair has been measured it is a relatively simple matter to determine the chosen ion's concentration. For a pair of ion selective electrodes a relationship of the following form can be used:

$$Log_{10} ([CI] \times [SI]) = f(mv) \qquad (4)$$

where [CI] and [SI] are the molar concentrations of the chosen ion and second ion respectively and f(mv) is a function of the measured potential difference mv, such as a polynomial equation. The function f(mv) is determined for each pair of selective electrodes by calibration, using solutions of different known concentrations of the chosen and second ions and measuring the corresponding potential difference mv. The chosen ion/second ion potential difference mv is measured using the electrode pair, and the second ion concentration [SI] is determined as explained previously by measuring (E2-E1) and applying equation (3). From the two results mv and [SI] the chosen ion concentration may be calculated. Measurements of mv and (E2-E1) can be made continuously or intermittently.

In the present invention, a mud filtrate ion may be a "principal" ion, and of interest for one or more of a number of reasons. For example, it may have a concentration in the mud of at least 100 ppm. It may have a significant effect on mud properties at any concentration, which is frequently the case when it is a deliberate special additive to the mud. It might be one giving rise to potential environmental problems if discharged even at low concentrations - eg, well below 100 ppm. All mud filtrate ions of interest could be assessed by the method of the invention by using appropriate ion selective electrodes, but are not necessarily so assessed. Thus, hydrogen and hydroxyl ion concentrations can be provided by pH measurement, and carbonate and hydrogen (bicarbonate) ion concentrations can be deduced from the measured concentrations of other ions. Of the principal mud filtrate ions present which are suitable for the inventive method, not all need to be measured. Typical principal mud filtrate ions for assay by this technique are sodium, potassium, calcium, sulphide and chloride.

As explained in detail in our aforementioned European Application, the assessment of the original mud components based upon the determined ion values is most conveniently made part of a larger system that outputs recommendations as to how the actual, present, mud components should be modified to attain the optimum values for the conditions currently being encountered down hole. More specifically, the measurement of the ionic composition of the mud filtrate is accompanied by a rig-site, computer-based interpretation giving continuous information on the chemical composition of the mud and the extent of the mud/formation interactions; this is associated with an advisory module recommending appropriate changes in the mud formulation.

## EXAMPLES

The following Examples are now given, though by way of illustration only, to show details of various embodiments of the invention.

The "independent", periodic analysis for the second ion of the ion-selective-electrode-responsive mud constituents is the first step in the process for controlling drilling mud. One possible analytical method for doing this on-site is the ion selective electrode method of "standard additions. Implementation of this method is illustrated with Examples 1 and 2. The use of the then known concentration of the second ion in completing the analytical process to determine the chosen ion concentration is illustrated with Examples 3 through 5.

### Example 1

Here the mud is analysed for sodium ion which is therefore the "second" ion. The electrical potential response of a commercial sodium ion selective electrode/reference electrode pair was first calibrated to concentration, in units of moles per liter. This was done by measuring the electrical potential differences in aqueous sodium chloride solutions, of 1, 0.1, 0.05, 0.01 and 0.001 molar, and then plotting these potentials against the logarithm of sodium ion concentration. The slope of this plot was found to be 56.84 millivolts (mv) per decade of sodium ion concentration ("Slope" in equation (3)).

These two electrodes were then placed into 10 ml of a water-based drilling mud to be analysed, containing an unknown amount of sodium ion dissolved in the aqueous phase. The electrical potential difference was measured as 178.89 millivolts. To this mixture was then added 3 ml of 0.36 molar sodium chloride solution, and the electrical potential remeasured, and found to be 204.68 millivolts.

The mathematical relationship between the change in ion selective electrode/reference electrode potential (E2-E1) from the addition of a known concentration of ion (here labelled as $C_2$) to a mixture containing the unknown concentration of the same ion (here labelled as $C_1$), is given by equation (3).

Since E2 and E1 are measured, "Slope" is known (measured by the calibration procedure), and $C_2$ is

known, $C_1$ can be calculated with equation (3). The sodium ion concentration for the mud used in this example, is so calculated as 0.034 molar. The sodium ion concentration in this mud was then measured by another method, the ion chromatograph, and found to be 0.032 molar. This measurement is in good agreement with the ion selective electrode "standard addition" method.

## Example 2

Here the same mud analysed for chloride ion (which is therefore the "second" ion in that particular example) by the ion selective electrode "standard addition" method. Calibration was accomplished as described above but using a commercial Orion chloride ion selective electrode and a Metrohm Double Junction reference electrode. The slope of the calibration survey was so found to be -56 mv/decade. Electrical potentials were then measured with the same electrodes in 10 ml of the drilling mud, and found to be 69.74 mv. To this mixture was then added a known quantity of chloride ion, here 1 ml of 0.1 molar sodium chloride solution. The electrical potential difference between the chloride selective electrode and the reference electrode was measured, and found to be 60.83 millivolts. The concentration of chloride ion was calculated by the equation (3), with a slope of -56mv/decade, and was found to be 0.021 molar.

The second step in controlling the composition of drilling mud by this invention is the continuous analysis of the mud via electrical potentials measured between two ion selective electrodes, whereby the concentration of the second ion is known. The implementation of this step is illustrated in the following Examples.

## Example 3

The mud used in this test was that referenced in Example 1; the chloride ion concentration was determined as in Example 2. The sodium and chloride ion selective electrodes of Examples 1 and 2 were calibrated as described in Example 1, except that the differences (mv) in electrical potential between the two ion selective electrodes was plotted against the decadic logarithm of the product of the sodium and chloride ion concentration so as to determine the function f(mv) of equation (4). For convenience, the resulting curve f(mv) was fitted mathematically to an empirical equation, using a statistics analysis computer program. In this example the computer program was "RS1", purchased from BBN Software Products Corp., Cambridge, Mass. The equation was:

$$\log ([Na] \times [Cl]) = 0.0193 \times (mv) - 2.2 \times 10^{-5} (mv)^2 - 5$$

The potential difference (mv) between the particular sodium and chloride ion selective electrodes immersed in the mud suspension was 109.1 mv. The chloride ion concentration was known to be 0.021 molar, from the experiment used to illustrate Example 2. The sodium ion concentration, computed from the measured potential, this chloride concentration, and the calibration equation, was 0.033 molar. To check the accuracy of this result the sodium ion concentration was measured independently with an ion chromatograph, and found to be 0.032 molar. The sodium ion concentration in this particular drilling mud, was also measured by the standard addition technique and found to be 0.034 molar (Example 1).

## Example 4

The mud used in this example was a suspension of bentonite clay (nominally 20% by volume) in brine. Sufficient chloride salts were added to the water phase to make the suspension 0.459 molar in chloride ion. The sodium and chloride ion selective electrodes were purchased from Philips Co., and are different than those used to develop Examples 1 through 3. The calibration curve was determined in suspension-free aqueous solutions, as described in the previous examples and was fitted to an empirical equation f(mv) as described in Example 3. The equation (4) for these electrodes was:

$$\log ([Na] \times [Cl]) = -0.03404 \times (mv) - 0.0347 \times (mv)^2 - 6.6131$$

The electrical potential (mv) measured between these sodium and chloride electrodes in the brine/bentonite suspension was 201.3 mv. From the known chloride content, this potential and this equation, a sodium ion concentration of 0.48 molar was computed. The concentration of sodium ion known to be present, from the salts originally weighted into the brine, was 0.49 molar.

8

Example 5

The same brine/clay suspension was used in this test. The cation electrode was a potassium ion selective electrode also purchased from Philips Co., the chloride ion selective electrode was that described in Example 4. The calibration was accomplished as described above, except, of course, that varying amounts of potassium chloride were used, rather than sodium chloride. The empirical equation relating the potential responses of these particular electrodes to potassium chloride concentration product was found to be the following:

$$\log ([k] \times [C1]) = 0.0312 \times (mv) - 0.0399 \times (mv)^2 - 5.23$$

The potential difference (mv) measured between these two electrodes in the brine/clay suspension was 106.6 mv. From this value, the known concentration of chloride ion, and this equation, a concentration of potassium of 0.0096 moles per liter was computed. The amount of potassium in the brine was 0.01 molar, known from the weights of the salts originally used to prepare this particular brine.

## Claims

1. A method for the determination of the concentration of a chosen ionic component in a drilling mud, in which, using a first ion selective electrode selective for the chosen ion together with a second ion selective electrode selective for a second ion, the concentration of which is known or can be determined, there is measured the potential difference generated across the two electrodes in the mud as a result of both these ions, and thus the concentration of the chosen ion in the mud.

2. A method as claimed in Claim 1, in which the ions to be sensed are one or more of the potassium, sodium and calcium cations, and the chloride anion.

3. A method as claimed in either of the preceding Claims, in which the mud is essentially a suspension of a bentonite clay in water.

4. A method as claimed in any of the preceding Claims, in which the electrode pair is placed in the return mud after it has just emerged from the bore.

5. A method as claimed in any of the preceding Claims, in which the ion selective electrode is one of those asterisked in Table III hereinbefore.

6. A method as claimed in any of the preceding Claims, in which the second ion concentration is periodically determined using an appropriate ion selective electrode/reference electrode pair.

7. A method as claimed in any of the preceding Claims, in which the potential difference for the chosen selective/selective electrode pair is measured; the product of the chosen and second ion concentrations is determined from a previously-prepared calibration curve, and the concentration of the chosen ion is computed therefrom.

8. A drilling mud ion determination method as claimed in any of the preceding Claims and substantially as described hereinbefore.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-2 930 967 (LAIRD) * Column 2, lines 2-15; column 3, lines 5-21; column 4, lines 4-8; figures * | 1 | E 21 B 49/00 G 01 N 27/28 |
| A,D | EP-A-0 282 231 (FOREX) * Abstract; figures * | 1 | |

TECHNICAL FIELDS SEARCHED (Int. Cl.5)

E 21 B
G 01 N

The present search report has been drawn up for all claims

| Place of search | Date of completion of the search | Examiner |
|---|---|---|
| THE HAGUE | 08-03-1990 | WEIAND T. |

EPO FORM 1503 03.82 (P0401)